**Europäisches Patentamt**

**European Patent Office**

**Office européen des brevets**

(19)

(11) Veröffentlichungsnummer : **0 339 314 B1**

(12) **EUROPÄISCHE PATENTSCHRIFT**

(45) Veröffentlichungstag der Patentschrift :
**24.06.92 Patentblatt 92/26**

(21) Anmeldenummer : **89105942.0**

(22) Anmeldetag : **05.04.89**

(51) Int. Cl.$^5$ : **F41B 6/00**

(54) **Waffensystem.**

(30) Priorität : **28.04.88 DE 3814454**

(43) Veröffentlichungstag der Anmeldung :
**02.11.89 Patentblatt 89/44**

(45) Bekanntmachung des Hinweises auf die
Patenterteilung :
**24.06.92 Patentblatt 92/26**

(84) Benannte Vertragsstaaten :
**DE ES FR GB IT SE**

(56) Entgegenhaltungen :
**DE-A- 2 250 803**
**GB-A- 2 125 527**

(73) Patentinhaber : **MTU MOTOREN- UND
TURBINEN-UNION MÜNCHEN GMBH
Dachauer Strasse 665 Postfach 50 06 40
W-8000 München 50 (DE)**

(72) Erfinder : **Grieb, Hubert, Dr.
Nimrodstrasse 44
W-8034 Germering (DE)**

EP 0 339 314 B1

**Beschreibung**

Die Erfindung betrifft ein mobiles Waffensystem, bestehend aus einem elektrisch betriebenen Geschütz und einer Energieversorgungsanlage, mittels der Energie in einer mit dieser gekoppelten Speichereinheit speicherbar und bei Bedarf (Schuß) als elektrische Energie dem Geschütz zuführbar ist.

Herkömmliche ballistische Waffen, bei denen das Geschoß mittels einer explosionsartigen Treibmittelverbrennung beschleunigt wird, sogenannte Gasdruckwaffen, haben den Nachteil, daß aus physikalischen Gründen die Mündungsgeschwindigkeit nicht über ca. 1800 m/sec. steigerbar ist, was darauf beruht, daß die maximal erzielbare Mündungsgeschwindigkeit durch die größtmögliche Gasexpanisonsgeschwindigkeit begrenzt ist.

Aus der DE-OS 22 50 803 ist ein gattungsgemäßes Waffensystem auf einem elektrisch betriebenen Geschütz bekannt, mit dem sehr hohe Mündungsgeschwindigkeiten (größer 10000 m/sec.) erreichbar sind.

Problematisch bei derartigen elektrischen Waffen wirkt sich jedoch aus, daß für eine sehr kurze Zeitdauer (Größenordnung von 1 msec.) extrem große Leistungen zur Beschleunigung des Geschosses zur Verfügung stehen müssen. Die erforderlichen Leistungen liegen im Bereich von Gigawatt und die dem Geschoß zuzuführenden Energien im Bereich Megajoule, wenn Geschosse von signifikanter Masse, beispielsweise einigen kg beschleunigt werden sollen. Aus Gründen des Luftwiderstandes sind dabei Mündungsgeschwindigkeiten bis zu 4000 m/sec. sinnvoll.

Mit einem Verbrennungsmotor der Leistung, wie sie für Panzerfahrzeuge üblich ist (etwa 1000 KW) würde die Erzeugung der für einen Schuß kurzzeitig benötigten Leistung zu lange dauern. Bei Verwendung eines in der genannten Druckschrift vorgeschlagenen Schwungrades wäre angesichts langer Nachladezeiten die Speicherung der Energie für eine Vielzahl von Schüssen erforderlich, um im Einsatzfall in kurzer Zeitfolge eine hohe Schußfolge abgeben zu können. Hierzu wären Schwungraddimensionen im Bereich von mehreren cbm-Volumen und mehreren Tonnen Gewicht erforderlich, wodurch ein mit dieser Vorrichtung ausgerüstetes Gefechtsfahrzeug erheblich größere Maße und größeres Gewicht aufweisen würde. Hinzu kommt, daß in einem üblichen Fall eines Einsatzes gleichzeitig gefahren und geschossen werden soll, wobei keine Leistung des Antriebsaggregates zur Nachladung des Schwungradspeichers abgezweigt werden könnte.

Aber auch die Verwendung einer Gasturbine könnte das Problem nicht lösen, da derartige Anlagen ein erhebliches Bauvolumen beanspruchen und keine wesentlich größeren Leistungen bieten als Verbrennungsmotoren.

Es ist daher Aufgabe der Erfindung, ein gattungsgemäßes Waffensystem zu schaffen, das in der Lage ist, eine schnelle Folge von Schüssen abzugeben, wobei jeweils nur die für einen oder wenige Schüsse erforderliche Energie zu speichern ist. Es soll also die erforderliche Energie innerhalb eines sehr kurzen Zeitraumes, der im Bereich weniger Sekunden liegt, aufbringbar sein.

Erfindungsgemäß wird die Aufgabe durch die im Patentanspruch 1 angegebenen Merkmale gelöst.

Die wesentlichsten Vorteile des erfindungsgemäßen Waffensystems sind darin zu sehen, daß für eine kurze Zeit, die bei ca. 2-4 sec. liegt eine sehr hohe Leistung erzielbar ist, wodurch innerhalb dieser Zeit die Speichereinheit auf Energien im Bereich von ca. 50MJ ladbar ist und so Geschosse erheblicher Masse nach dieser Ladezeit abfeuerbar sind. Erst hierdurch ist es möglich, den Speicherbedarf auf die Energiemenge eines oder weniger Schüsse (Kampfpanzerkanone) zu begrenzen, ohne daß unerträgliche Ladezeiten entstehen. Erst hierdurch ist es ferner möglich, die Speichereinheit so zu verkleinern, daß sie in einem Gefechtsfahrzeug unterbringbar ist. Ferner benötigt die erfindungsgemäße Energieversorgungsanlage selbst wenig Raum und ist lediglich von - verglichen mit den erforderlichen Triebstoff- Antriebs- und Speichermassen - vernachlässigbarem Gewicht.

Mittels der erfindungsgemäßen Merkmalskombination läßt sich vorteilhafterweise die Leistung der Turbine kurzzeitig auf Werte größer 15 MW steigern, so daß derart kurze Ladezeiten erzielbar sind. Vorteilhafterweise wird dabei die Turbineneintrittstemperatur erheblich über die zulässigen Bauteiltemperaturen erhöht, was jedoch angesichts der kurzen Vollastzeiten und der Wärmeleitverzögerung zum Bauteilkern nicht zur Bauteilzerstörung führt.

In vorteilhafter Weiterbildung der Erfindung ist die Speichereinheit als kinetischer Speicher ausgebildet, der eine Schwungmasse und eine Generatorwicklung aufweist, wobei bei Bedarf (Schuß) durch äußere Beschaltung der Generatorwicklung in der Schwungmasse gespeicherte Rotationsenergie als elektrische Energie abführbar ist. Dies hat den Vorteil, daß zur Erlangung von Gefechtsbereitschaft die Turbine kurzzeitig auf Vollast gefahren wird, wodurch die Schwungmasse auf Nenndrehzahl hochgefahren wird. Anschließend kann die Turbine auf Leerlaufdrehzahl oder Stillstand heruntergefahren werden, wobei die Energie in der Schwungmasse gespeichert bleibt und somit Schußbereitschaft erhalten bleibt. Durch Abgabe eines Schusses wird die Schwungmasse von ihrer Nenndrehzahl auf eine niedrigere Drehzahl verzögert, die vorzugsweise in etwa der Leerlaufdrehzahl der Turbine entspricht. Durch kurzzeitige Vollast der Turbine ist die Schwungmasse wieder innerhalb von 2-4 sec. auf Nenndrehzahl und somit Bereitschaft für einen weiteren Schuß bringbar.

In vorteilhafter Weiterbildung der Erfindung ist zwischen der Turbinenwelle und der Speichereinheit eine Überholkupplung vorgesehen, die bei niedrigerer Turbinendrehzahl als Speicherdrehzahl außer Eingriff ist. Hierdurch wird auf einfache Weise erreicht, daß die Speicherdrehzahl bei Herunterfahren der Turbinendrehzahl erhalten bleibt, und andererseits die Turbine beim Hochfahren den Speicher auf Nenndrehzahl mitzieht.

Vorteilhafterweise ist die Brennkammer mit einer selbstzündenden Kombination aus flüssigem Brennstoff und flüssigem Oxidator beaufschlagt, wodurch mit geringer Verzögerung die zum Betrieb der Turbine notwendigen Zustandsbedingungen erzielbar sind.

In alternativer Ausführung der Erfindung ist die Brennkammer mit einem selbstzündenden Brennstoff/Oxidator-Gemisch zündbar und anschließend auf Kerosin (Dieselöl) als Brennstoff umstellbar. Hierdurch wird bei schneller Zündung die Menge des erforderlichen besonderen Brennstoffes reduziert, was sich insbesondere bei der Verwendung in Verbindung mit einer Antriebsanlage, die Kerosin bzw. Dieselöl verbrennt, vorteilhaft auswirkt.

In vorteilhafter Weiterbildung der Erfindung ist die Turbine zweiteilig ausgeführt, wobei zwischen den funktionell parallel geschalteten Teilturbinen die Brennkammer angeordnet ist, derart, daß der in der Brennkammer erzeugte Brenngasstrom in zwei entgegengesetzt gerichtete Teilströme umgelenkt wird, die die Teilturbinen beaufschlagen. Hierdurch ist eine kompakte, wenig Platz beanspruchende Ausführung erzielbar, wobei sich gleichzeitig die in wellenaxialer Richtung gerichteten Gaskräfte der Teilturbinen gegenseitig aufheben, und hierdurch die Wellenlager der Turbinenwelle entlasten.

Vorzugsweise sind die Teilturbinen jeweils fünfstufig ausgeführt, wodurch eine thermodynamisch günstige Energieumsetzung in der Turbine erzielbar ist.

In vorteilhafter Weiterbildung ist die Brennkammer als Einrohr-Brennkammer aufgebaut und mittels eines Ringkanales mit der Turbine verbunden. Dies ermöglicht eine einfache, robuste Ausführung mit einfacher Wartungsmöglichkeit.

Vorteilhafterweise ist in die Brennkammer zusätzlich Wasser als Ballast einspritzbar. Hierdurch läßt sich das Gasvolumen bei gleichzeitiger Reduzierung der Gastemperaturen auf das zulässige Maß vorteilhafterweise erhöhen.

Eine bevorzugte Weiterbildung der Erfindung sieht weiter vor, daß die Einspritzung von Brennstoff, Oxidator und Wasser mittels Pumpen erfolgt, die als regelbare Verdrängerpumpen ausgebildet sind, und von einem oder mehreren Hydraulik- oder Elektromotoren betriebbar sind. Hierdurch sind hohe Brennkammerdrücke bei geringen Hochlaufzeiten erzielbar.

Eine Weiterbildung der Erfindung sieht vor, daß die Brennkammer, der Ringkanal, die Beschaufelung der ersten oder der ersten beiden Turbinenstufe(n) sowie die vom Heißgas beaufschlagten Wandungen auf der Innenseite mit hitzebeständigen Isolierschichten ausgekleidet sind, und die Wärmekapazität der Isolierschichten derart gewählt sind, daß die maximal zulässigen Bauteiltemperaturen bei wesentlich höheren Brennkammertemperaturen erst nach einer Mehrzahl von Ladezyklen, d.h. einer Zeit größer ca. 15 sec. erreicht sind. Dies hat den Vorteil, daß eine Mehrzahl von Schüssen in kurzer Folge abgebbar sind, wobei die Turbine während dieser Zeit auf Vollast läuft. Beispielsweise bei einer Folge von fünf Schüssen hintereinander wird die Turbine für ca. 15 sec. auf Vollast laufen und anschließend heruntergefahren. Ein weiterer Vorteil ist darin zu sehen, daß die rotierenden Turbinenteile, also insbesondere die Turbinenwelle und die Beschaufelung hierbei ebenfalls als Energiespeicher fungieren. Durch die Wärmekapazitäten der Isolierschichten wird dabei verhindert, daß während dieser Zeit die Bauteiltemperaturen zu hoch werden.

In vorteilhafter Weiterbildung der Erfindung sind die Laufschaufeln der ersten oder der ersten zwei Turbinenstufe(n) mittels Wasser aus der vorgesehenen Ballastmenge kühlbar, daß durch das freie Ende der Turbinenwelle zuführbar ist und die Laufschaufeln an ihren Profilhinterkanten verläßt. Dies ermöglicht vorteilhafterweise eine gleichzeitige effektive Kühlung der Laufschaufeln und der Zumengung eines Teiles des Wasserballastes.

Ebenso sind die Leitschaufeln der ersten oder der ersten zwei Turbinenstufe(n) mittels Wasser aus der vorgesehenen Ballastmenge kühlbar, wobei das Wasser über das Turbinengehäuse zuführbar ist und die Leitschaufeln an ihren Profilhinterkanten verläßt. Hierdurch sind die oben genannten Vorteile auch für die Leitschaufeln der Turbine erzielbar.

In vorteilhafter Weiterbildung der Erfindung ist das Waffensystem auf einem Gefechtsfahrzeug untergebracht, das mittels einer seperaten Antriebsanlage angetrieben ist. Erst hierdurch wird ermöglicht, daß gleichzeitig die im Einsatz erforderliche hohe Antriebsleistung und Energiebereitstellung für die elektrische Waffe erzielbar ist.

Vorzugsweise ist Abgas aus der Antriebsanlage der Brennkammer über eine absperrbare Gasleitung zuführbar, wobei die Turbine auf einer Leerlaufdrehzahl haltbar ist. Hierdurch ist vorteilhafterweise das Abgas der Antriebsanlage dazu verwendbar, daß die Turbine auf einer derartigen Drehzahl gehalten wird, die ein schnelles Hochfahren auf Vollast ermöglicht. Die Leerlaufdrehzahl liegt etwa im Bereich von 80% der Vollastdrehzahl, wozu eine Leistung im Bereich von 1°/oo der Leitung bei Vollast erforderlich ist.

Vorteilhafterweise weist die Antriebsanlage einen verbrennungskraftmaschinengetriebenen Antriebsgenerator auf, der über ein Steuerelement einen oder mehrere Fahrmotoren speist, wobei der statische elektrische Speicher mittels eines Umschalters vom Antriebsmotor ladbar ist. Hierdurch wird eine erhöhte Renundanz des Waffensystemes, beispielsweise bei Ausfall der Turbinenanlage ermöglicht. Die zur Ladung der Speichereinheit benötigte Zeit liegt dabei zwar wesentlich höher, jedoch wird eine begrenzte Einsatzfähigkeit des Gefechtsfahrzeuges erhalten. Alternativ kann bei Ausfall des Fahrzeugantriebes die in der Speichereinheit gespeicherte Energie bzw. die im Ladeaggregat verfügbare Leistung bei entsprechender Anpassung zum Antrieb der Fahrmotoren verwendet werden, wodurch eine Beweglichkeit des beschädigten Fahrzeuges über eine kürzere Strecke gewährleistet bleibt.

In alternativer Ausführung ist die Generatorwicklung der Speichereinheit, als Motor geschaltet, zur Beschleunigung der Schwungmasse vom Antriebsgenerator beaufschlagbar. Durch diese umgekehrte Beschaltung der Generatorwicklung wird ebenfalls bei Ausfall der Turbine eine Redundanz, d.h. eine beschränkte Funktionsfähigkeit der elektrischen Waffe erhalten.

Die Erfindung wird nachfolgend anhand der beigefügten Zeichnung weiter erläutert. Dabei zeigt:

Fig. 1 einen schematischen Schnitt durch eine Energieversorgungsanlage,

Fig. 2 einen Axialschnitt eines Turbinenausschnittes,

Fig. 3 eine schematische Darstellung der Energieversorgungsanlage mit einer Antriebsanlage,

Fig. 4 eine schematische Ansicht einer alternativen Ausführung einer Energieversorgungsanlage mit einer Antriebsanlage.

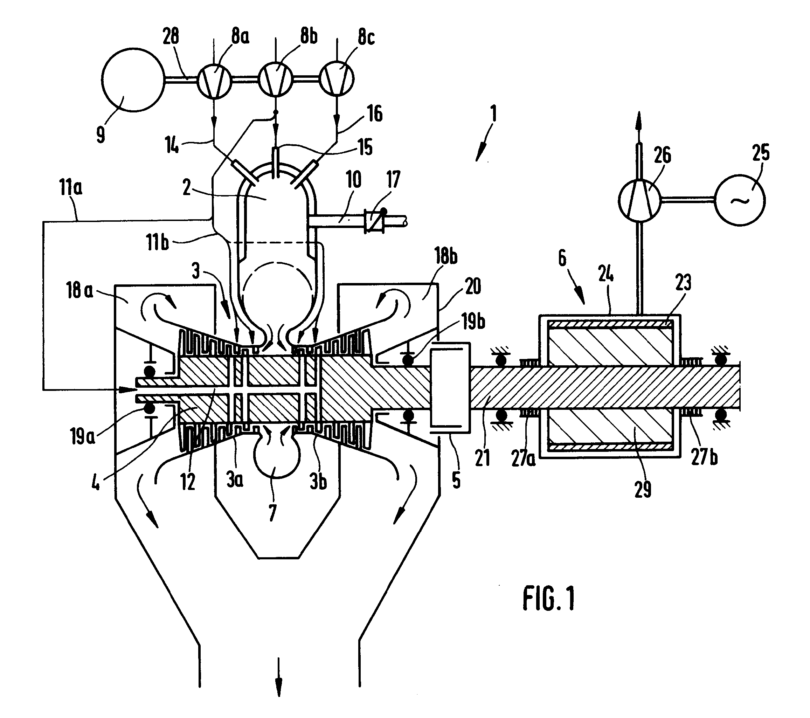

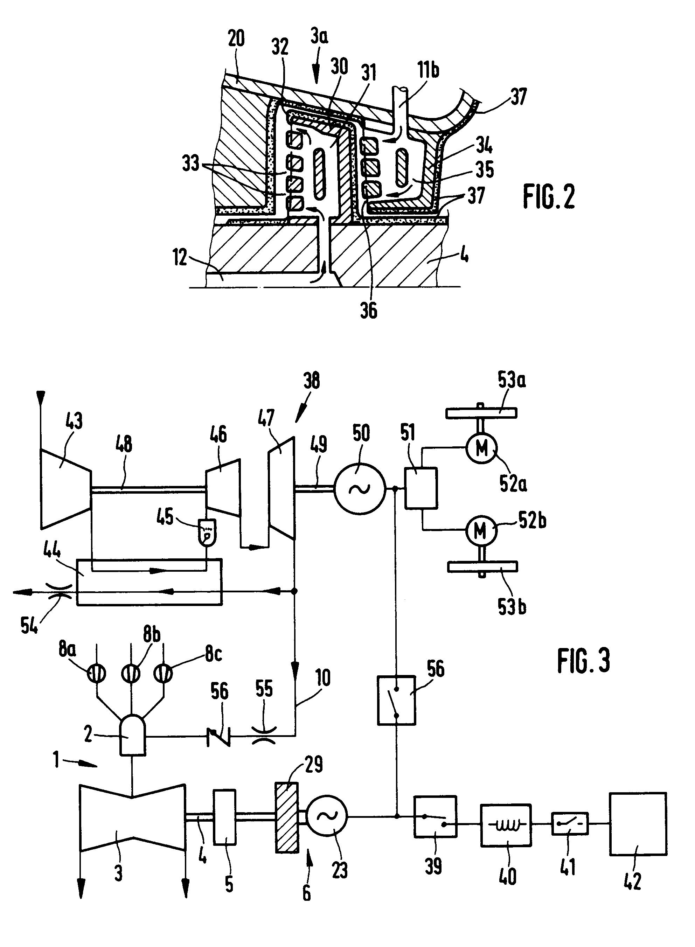

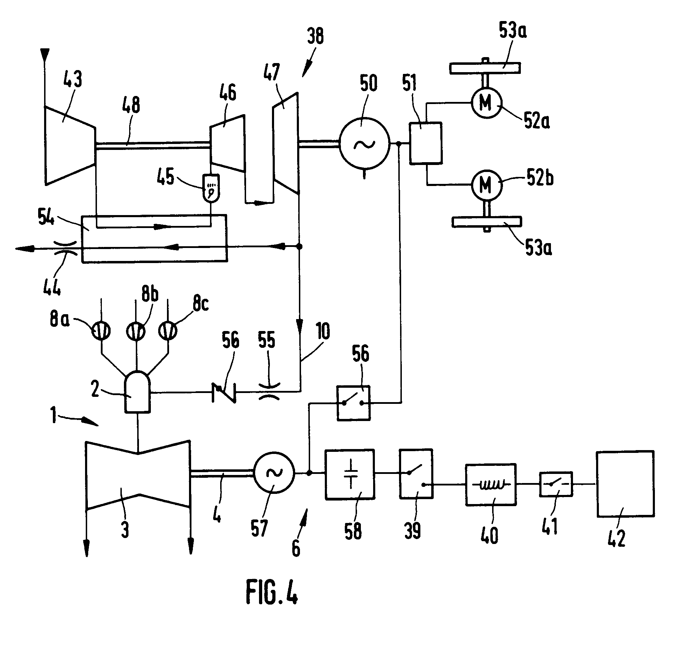

Fig. 1 zeigt einen schematischen Axialschnitt durch die Energieversorgungsanlage 1, die im wesentlichen aus einer Brennkammer 2, einer Turbine 3 und einer Speichereinheit 6 besteht. Brennstoff, Wasser und Oxidator wird über die Pumpen 8a, 8b, 8c und die Brennstoffleitungen 14, die Wasserleitung 15 und die Oxidatorleitung 16 der Brennkammer 2 zugeführt. Eine mittels des Rückschlagventiles 17 absperrbare Gasleitung 10 einer in Fig. 3 oder 4 näher dargestellten Antriebsanlage beaufschlagt die Brennkammer 2 im Leerlauf, in Bereitschaft oder zwecks Anlassen mit Abgas aus der Antriebsanlage. Das Brenngas gelangt von der Brennkammer 2 über den Ringkanal 7 zur symmetrisch ausgeführten zweistufigen Turbine 3. Nach Passieren der fünfstufigen Teilturbine 3a und 3b gelangt das Abgas zu den Abgaskanälen 18a, 18b und wird von dort außenbords befördert. Die Turbine 3 ist auf einer Turbinenwelle 4 angebracht, welche wiederum mittels der Lager 19a, 19b im Turbinengehäuse 20 gelagert ist. An der Turbinenwelle 4 ist eine Überholkupplung 5 angeflanscht, die wiederum mit einer Speicherwelle 21 der Speichereinheit 6 gekoppelt ist. Die Speicherwelle 21 ist über die Lager 22a, 22b gehäuseseitig gelagert. Die auf der Speicherwelle 21 angeordnete Speichereinheit 6 besteht im wesentlichen aus einer Generatorwicklungg 23, die zusammen mit einer Schwungmasse 29 gasdicht in einem Speichergehäuse 24 untergebracht ist. Zwecks Evakuierung der Speichereinheit 6 ist eine von einem Motor 25 betriebene Vakuumpumpe 26 angeschlossen. Der Innenraum der Speichereinheit 6 ist ferner mittels Dichtungen 27a, 27b gegenüber der Umgebung gasdicht verschlossen.

Die als Verdrängerpumpe ausgeführten Pumpen 8a, 8b, 8c sind über eine gemeinsame Welle 28 mit einem Hydraulik-oder Elektromotor 9 verbunden.

Hinter der Wasserpumpe 8b ist eine Abzweigung in der Wasserleitung 15 vorgesehen, mittels der ein Teil des als Ballast dem Prozeß zuführbaren Wassers über die Leitungen 11a und 11b den Teilturbinen 3a und 3b als Kühlwasser zugeführt wird.

Dabei ist die Leitung 11a mit einer im Zentrum der Turbinenwelle 4 angeordneten Kühlwasserbohrung 12 verbunden, die wiederum mit der ersten bzw. mit den ersten zwei Laufschaufelreihen der Teilturbinen 3a und 3b kommuniziert. Die Leitung 11b ist mit den Leitschaufeln der ersten oder der ersten zwei Leitschaufelreihen der Teilturbinen 3a und 3b verbunden.

Fig. 2 zeigt einen Teilaxialschnitt durch die ersten Stufen der Teilturbine 3a, die gleich der Teilturbine 3b ausgeführt ist. Dabei ist die Turbinenwelle 4 mit einer der daran angebrachten Laufschaufeln 30 der ersten Turbinenstufe gezeigt. Die im inneren der Turbinenwelle 4 vorgesehene Kühlwasserbohrung 12 kommuniziert mit dem hohlen Innenraum 31 der Laufschaufel 30 derart, daß im Betrieb Kühlwasser zu strömt welches den Innenraum 31 durchströmt und durch die an der Profilhinterkante 32 der Laufschaufel 30 vorgesehenen Austrittsöffnungen 33 austritt und dem Gasstrom zugemischt wird. Analog ist eine Leitschaufel 34 der ersten Turbinenstufe ausgebildet, wobei mittels der Leitung 11b Kühlwasser dem Hohlraum 35 zugeführt wird, der die Leitschaufel 34 an den Austrittsöffnungen 36 verläßt. Die vom Heißgas beaufschlagten Bauteile, insbesondere Laufschaufeln 30 und Leitschaufeln 34 sowie die Innenseite des Turbinengehäuses 20 und die Turbinenwelle 4 sind mit hitzebeständigen Isolierschichten 37 bedeckt, um diese Bauteile kurzzeitig gegenüber den hohen Heißgastemperaturen abzuschirmen. Die Isolierschichten 37 können nach bekannten Verfahren in der gewünschten Dicke aufgebracht werden. Hierfür eignen sich beispielsweise Schichten mit Zirkonoxid und/oder anderen geeigneten Werkstoffen die gut haften und eine geringe Wärmeleitung aufweisen. Diese können mittels thermischem Spritzen oder sonstiger bekannter Verfahren aufgebracht werden. Dabei werden die stationären Bauteile wie Turbinengehäuse 20 und Leitschaufeln 34 mit Schichten von mehreren mm Dicke versehen, und die rotierenden Bauteile, insbesondere die Laufschaufeln 30 mit Schichten von etwa 0,3 bis 0,7 mm, je nach Temperaturgradient und Werkstoff.

Fig. 3 zeigt eine schematische Darstellung der Energieversorgungsanlage 1 in Verbindung mit einer Antriebsanlage 38 eines nicht näher dargestellten Gefechtsfahrzeuges. Die Energieversorgungsanlage 1 steht im wesentlichen aus den bereits in Fig. 1 gezeigten Elementen: Brennkammer 2, Turbine 3, Überholkupplung 5 und Speichereinheit 6. Die Speichereinheit 6 besteht dabei aus der schematisch dargestellten Schwungmasse 29 und der Generatorwicklung 23. Die Brennkammer 2 wird mittels der Pumpen 8a, 8b, 8c von Brennstoff, Wasser und Oxidator beaufschlagt. Die Generatorwicklung 23 ist über einen Schalter 39, einen induktiven Zwischenspeicher 40 und einen Schalter 41 mit der nicht näher dargestellten elektrischen Waffe 42 verbunden. Zur Abgabe eines Schusses wird der Schalter 41 geschlossen, wodurch die in der Schwungmasse 22 gespeicherte Rotationsenergie mittels der Generatorwicklung 23 in elektrische Energie gewandelt wird und mittels des Zwischenspeichers 40 in einen für den Betrieb der elektrischen Waffe 42 geeigneten Impuls umgeformt werden. Dabei befindet sich der Schalter 39 in der in Fig. 3 dargestellten Stellung.

Die Antriebsanlage 38 besteht im wesentlichen aus einem Verdichter 43, einem Wärmetauscher 44, einer Antriebsbrennkammer 45, einer Gaserzeugerturbine 46 und einer Leistungsturbine 47, wobei die Gaserzeugerturbine 46 mit dem Verdichter 43 über eine Welle 48 gekoppelt ist. Die Leistungsturbine 47 ist über eine Welle 49 mit einem Antriebsgenerator 50 verbunden. Dieser ist elektrisch über ein Steuerelement 51 mit zwei elektrischen Fahrtmotoren 52a,52b verbunden, welche wiederum mechanisch die Antriebsräder 53a und 53b treiben. Im Betrieb wird Frischluft im Verdichter 43 angesaugt und verdichtet, anschließend im Wärmetauscher 44 vorgewärmt und in der Antriebsbrennkammer 45 mit Treibstoff verbrannt. Nach Antrieb der Gaserzeugerturbine 46 und der Leistungsturbine 47 wird das Abgas dem Wärmetauscher 44 zugeführt und verläßt nach Passieren eines Drosselventils 54 die Anlage. Ein Teil des Abgases gelangt über die Gasleitung 10 über ein Drosselventil 55 und ein Rückschlagventil 56 in die Brennkammer 2 und beaufschlagt die Brennkammer 2 der Energieversorgungsanlage 1. Hierdurch wird die Turbine 3 auf einer Leerlaufdrehzahl gehalten, und ermöglicht auf diese Weise ein schnelles Hochfahren auf Nenndrehzahl bei Betrieb der elektrischen Waffe 42. Die Einstellung des Abgasdurchsatzes durch die Gasleitung 10 erfolgt mittels der Drosselventile 54 und 55, die zu diesem Zweck mit einer nicht dargestellten Regeleinheit verbunden sind.

Befindet sich der Schalter 56 in seiner geschlossenen Schaltstellung, so ist die Generatorwicklung 23 mit dem Generator 50 und dem Steuerelement 51 verbunden. Hierdurch wird einerseits ermöglicht, daß bei Ausfall der Turbine 3 mittels des Generators 50 die Schwungmasse 29 dadurch beschleunigt wird, daß die Generatorwicklung 23 als Motor fungierend beaufschlagt wird. Andererseits kann bei Ausfall der Antriebsanlage 38 die in der Schwungmasse 29 gespeicherte Energie zum kurzzeitigen Antrieb der Fahrtmotoren 52a, 52b herangezogen werden, soweit die elektrischen Parameter angepaßt sind.

Die in Fig. 4 dargestellte schematische Darstellung einer alternativen Ausführung der Energieversorgungsanlage 1 in Verbindung mit der Antriebsanlage 38 ist im wesentlichen gleich der in Fig. 3 dargestellten Anlage ausgeführt, wobei jedoch die Speichereinheit 6 als mit der Turbine 3 gekoppelter Speichergenerator 57 ausgeführt ist, der elektrisch mit einem statischen elektrischen Speicher 58, in Form eines Kondensators verbunden ist. Die Redundanz des Gesamtsystems ist hierbei dadurch erzielbar daß bei Stellung des Schalters 56 in der gezeigten Stellung der Speicher 58 über den Antriebsgenerator 50 ladbar ist. Alternativ ist genauso die im Speicher 58 befindliche Energie zum Antrieb der Fahrtmotoren 52a, 52b verwendbar.

## Patentansprüche

1. Mobiles Waffensystem bestehend aus einem elektrisch betriebenen Geschütz und einer Energieversorgungsanlage (1), mittels der Energie in einer Speichereinheit (6) speicherbar und bei Bedarf (Schuß) als elektrische Energie dem Geschütz (42) zuführbar ist, dadurch gekennzeichnet, daß die Energieversorgungsanlage (1) eine von Brennstoff und Oxidator beaufschlagbare Brennkammer (2) und eine nachgeschaltete Turbine (3) aufweist, wobei die Turbine (3) mit der Speichereinheit (6) gekoppelt ist, und mit einem Druck von mehr als 70 bar bei einer Turbineneintrittstemperatur größer 1300 K kurzzeitig beaufschlagbar ist.

2. Waffensystem nach Anspruch 1, dadurch gekennzeichnet, daß die Speichereinheit (6) als kinetischer Speicher ausgebildet ist, der eine Schwungmasse (29) und eine Generatorwicklung (23) aufweist, wobei bei Bedarf (Schuß) durch äußere Beschaltung der Generatorwicklung (23) in der Schwungmasse (29) gespeicherte Rotationsenergie als elektrische Energie abführbar ist.

3. Waffensystem nach Anspruch 1, dadurch gekennzeichnet, daß die Speichereinheit (6) einen turbinengekoppelten Speichergenerator (57) aufweist, der einen statischen elektrischen Speicher (58) speist.

4. Waffensystem nach Anspruch 1 oder 2, dadurch gekennzeichnet, daß zwischen der Turbinenwelle (4) und der Speichereinheit (6) eine Überholkupplung (5) vorgesehen ist, die bei niedrigerer Turbinendrehzahl ($n_T$) als Speicherdrehzahl ($n_S$) ($n_T<n_S$) außer Eingriff ist.

5. Waffensystem nach einem der vorhergehenden Ansprüche, dadurch gekennzeichnet, daß die Brennkammer (2) mit einer selbstzündenden Kombination aus flüssigem Brennstoff und flüssigem Oxidator beaufschlagbar ist.

6. Waffensystem nach einem der Ansprüche 1 bis 4, dadurch gekennzeichnet, daß die Brennkammer (2) mit einem selbstzündenden Brennstoff/Oxidator-Gemisch zündbar und anschließend auf Kerosin (Dieselöl) als Brennstoff umstellbar ist.

7. Waffensystem nach einem der vorhergehenden Ansprüche, dadurch gekennzeichnet, daß die Turbine (3) zweiflutig ausgeführt ist, wobei zwischen den funktionell parallel geschalteten Teilturbinen (3a, 3b) die Brennkammer (2) angeordnet ist, derart, daß der in der Brennkammer (2) erzeugte Brenngasstrom in zwei entgegengesetzt gerichtete Teilströme umgelenkt wird, die die Teilturbine (3a, 3b) beaufschlagen.

8. Waffensystem nach Anspruch 7, dadurch gekennzeichnet, daß die Teilturbinen (3a, 3b) jeweils fünfstufig ausgeführt sind.

9. Waffensystem nach einem der vorhergehenden Ansprüche, dadurch gekennzeichnet, daß die Brennkammer (2) als Einrohr-Brennkammer aufgebaut ist und mittels eines Ringkanals (7) mit der Turbine (3) verbunden ist.

10. Waffensystem nach einem der vorhergehenden Ansprüche, dadurch gekennzeichnet, daß in die Brennkammer (2) zusätzlich Wasser als Ballast einspritzbar ist.

11. Waffensystem nach einem der vorhergehenden Ansprüche, dadurch gekennzeichnet, daß die Einspritzung von Brennstoff, Oxidator und Wasser mittels Pumpen (8a, b, c) erfolgt.

12. Waffensystem nach Anspruch 11, dadurch gekennzeichnet, daß die Pumpen (8a, b, c) als regelbare Verdrängerpumpen ausgebildet sind, die von einem oder mehreren Hydraulik- oder Elektromotor(en) (9) betreibbar sind.

13. Waffensystem nach einem der vorhergehenden Ansprüche, dadurch gekennzeichnet, daß die Brennkammer (2), der Ringkanal (7), die Beschaufelung (30,34) der ersten oder der ersten beiden Turbinenstufe(n) sowie die vom Heißgas beaufschlagten Wandungen auf der Innenseite mit hitzebeständigen Isolierschichten ausgekleidet sind, und die Wärmekapazität der Isolierschichten derart gewählt sind daß die maximal zulässigen Bauteiltemperaturen bei wesentlich höheren Brennkammertemperaturen erst nach einer Mehrzahl von Ladezyklen erreicht sind.

14. Waffensystem nach einem der vorhergehenden Ansprüche, dadurch gekennzeichnet, daß die Laufschaufeln (30) der ersten oder der ersten zwei Turbinenstufe(n) mittels Wasser aus der vorgesehenen Ballastmenge kühlbar sind, das durch das freie Ende der Turbinenwelle (4) zuführbar ist und die Laufschaufeln (30) an ihren Profilhinterkanten (32) verläßt.

15. Waffensystem nach einem der vorhergehenden Ansprüche, dadurch gekennzeichnet, daß die Leitschaufeln (34) der ersten oder der ersten zwei Turbinenstufen mittels Wasser aus der vorgesehenen Ballastmenge kühlbar sind, wobei das Wasser über das Turbinengehäuse (20) zuführbar ist und die Leitschaufeln (34) über an ihren Profilhinterkanten vorgesehene Austrittsöffnungen (36) verläßt.

16. Waffensystem nach einem der vorhergehenden Ansprüche, dadurch gekennzeichnet, daß es auf einem Gefechtsfahrzeug untergebracht ist, das mittels einer seperaten Antriebsanlage (38) angetrieben ist.

17. Waffensystem nach Anspruch 16, dadurch gekennzeichnet, daß Abgas aus der Antriebsanlage (38) der Brennkammer (2) über eine absperrbare Gasleitung (10) zuführbar ist, wobei die Turbine (3) auf einer Leerlaufdrehzahl haltbar ist.

18. Waffensystem nach Anspruch 3 und 16 oder 17, dadurch gekennzeichnet, daß die Antriebsanlage (38) einen verbrennungskraftmaschinengetriebenen Antriebsgenerator (50) aufweist, der über ein Steuerelement (51) einen oder mehrere Fahrmotoren (52a,b) speist, wobei der statische elektrische Speicher (58) mittels eines Umschalters (39) vom Antriebsgenerator (50) ladbar ist.

19. Waffensystem nach Anspruch 2, und 16 oder 17, dadurch gekennzeichnet, daß die Antriebsanlage (38) einen verbrennungskraftmaschinengetriebenen Antriebsgenerator (50) aufweist, der über ein Steuerelement (51) einen oder mehrere Fahrmotoren (52a,b) speist, wobei die Generatorwicklung (23) der Speichereinheit (6) als Motor geschaltet zur Beschleunigung der Schwungmasse (29) vom Antriebsgenerator (38) beaufschlagbar ist.

**Revendications**

1. Système d'arme mobile composé d'un canon à fonctionnement électrique et d'une installation d'alimentation en énergie (1) à l'aide de laquelle de l'énergie peut être stockée dans un accumulateur (6) et être fournie à l'arme (42) comme énergie électrique à la demande (tir), système caractérisé en ce que l'installation d'alimentation en énergie (1) comprend une chambre de combustion (2) alimentée en carburant et en un oxydant et une turbine (3) en aval, la turbine (3) étant reliée à l'accumulateur (6) et est alimentée pendant une courte période à une pression supérieure à 70 bars et une température d'entrée de turbine supérieure à 1300°K.

2. Système d'arme selon la revendication 1, caractérisé en ce que l'accumulateur (6) est un accumulateur cinétique comprenant une masse d'inertie (29) et un enroulement de générateur (23) et à la demande (tir) un branchement extérieur de l'enroulement de générateur (23) évacue sous forme d'énergie électrique l'énergie de rotation accumulée dans la masse d'inertie (29).

3. Système d'arme selon la revendication 1, caractérisé en ce que l'accumulateur (6) est un générateur accumulateur (57) couplé à la turbine qui alimente un accumulateur électrique (58) statique.

4. Système d'arme selon la revendication 1 ou 2, caractérisé par un embrayage à roue libre (5) entre l'arbre de turbine (4) et l'accumulateur (6), cet embrayage étant hors prise pour une vitesse de rotation de turbine ($n_T$) inférieure à la vitesse de rotation de l'accumulateur ($n_S$) ($n_T < n_S$).

5. Système d'arme selon l'une des revendications précédentes, caractérisé en ce que la chambre de combustion (2) est alimentée par un mélange auto-allumant formé de carburant de carburant liquide et d'un oxydant en liquide.

6. Système d'arme selon l'une des revendications 1 à 4, caractérisé en ce que la chambre de combustion (2) peut être allumée par un mélange auto-allumant de carburant/oxydant, puis être transformée pour utiliser du kérosène (gaz oïl), comme carburant (7).

7. Système d'arme selon l'une des revendications précédentes, caractérisé en ce que la turbine (3) est une turbine à double flux et entre les parties de turbine (3a, 3b) branchées fonctionnellement en parallèle, on a la chambre de combustion (2) de façon que le flux de gaz de combustion généré dans la chambre de combustion (2) soit dévié sous la forme de deux flux partiels dirigés dans des directions opposées et alimentant les deux parties de turbine (3a, 3b).

8. Système d'arme selon la revendication 7, caractérisé en ce que les parties de turbine (3a, 3b) sont chacune à trois étages.

9. Système d'arme selon l'une des revendications précédentes, caractérisé en ce que la chambre de combustion (2) est une chambre de combustion monotube reliée à la turbine (3) par un canal annulaire (7).

10. Système d'arme selon l'une des revendications précédentes, caractérisé en ce que de l'eau peut être injectée comme ballast de manière complémentaire dans la chambre de combustion (2).

11.) Système d'arme selon l'une des revendications précédentes, caractérisé en ce que l'injection de carburant, d'oxydant ou d'eaux se fait à l'aide de pompes (8a, b, c).

12. Système d'arme selon la revendication 11, caractérisé en ce que les pompes (8a, b, c) sont des pompes de refoulement, réglables entraînées par un ou plusieurs moteurs hydrauliques ou électriques (9).

13. Système d'arme selon l'une des revendications précédentes en ce que la chambre de combustion (2), le canal annulaire (7) et les pales (30, 34) du premier ou des deux premiers étages de la turbine ainsi que les parois exposées aux gaz chauds sur le côté inférieur sont revêtus de couches isolantes réfractaires et la capacité calorifique des couches isolantes est choisie pour que les températures maximales autorisées des pièces ne soient atteintes qu'après plusieurs cycles de charge pour des températures considérablement plus élevées régnant dans la chambre de combustion.

14. Système d'arme selon l'une des revendications précédentes, caractérisé en ce que les pales (30) du premier étage de turbine ou des premiers étages des deux turbines sont refroidies par de l'eau provenant de la quantité d'eau formant ballast et qui est introduite par l'extrémité libre de l'arbre (4) de la turbine et sort du bord arrière (32) du profil des pales (30) du rotor.

15. Système d'arme selon l'une des revendications précédentes, caractérisé en ce que les pales directrices (34) du premier étage ou des premiers étages des deux parties de turbine sont refroidies par l'eau provenant de la quantité d'eau formant ballast, l'eau étant fournie par l'intermédiaire du carter (20) de la turbine et quitte les pales directrices (34) par des orifices de sortie (36) prévus dans le bord arrière des profils.

16. Système d'arme selon l'une des revendications précédentes, caractérisé en ce qu'il équipe un véhicule de combat entraîné par une installation d'entraînement (38) distincte.

17. Système d'arme selon la revendication 16, caractérisé en ce que les gaz d'échappement de l'installation (38) sont fournis à la chambre de combustion (2) par une conduite de gaz (10) susceptible d'être fermée, pour maintenir la turbine (3) en permanence à la vitesse de rotation de ralenti.

18. Système d'arme selon la revendication 3 et 16 ou 17, caractérisé en ce que l'installation d'entraînement (38) comporte un générateur d'entraînement (50) entraîné par un moteur à combustion interne et qui alimente un ou plusieurs moteurs de roulement (52a, b) par un élément de commande (51), l'accumulateur électrique (58) statique pouvant être chargé par le générateur d'entraînement (50) par l'intermédiaire d'un commutateur (56).

19. Système d'arme selon la revendication 2, 16 ou 17, caractérisé en ce que l'installation d'entraînement (38) comporte un générateur d'entraînement (50) entraîné par un moteur à combustion interne et qui alimente un ou plusieurs moteurs de déplacement (52a, b) par un élément de commande (51), l'enroulement de générateur (23) de l'unité d'accumulation (6) étant branché comme moteur pour accélérer la masse d'inertie (29) à partir du générateur d'entraînement (38).


## Claims

1. A mobile weapons system consisting of an electrically operated gun and an energy supply plant (1), by means of which energy can be stored in a storage unit (6) and fed to the gun (42) as electrical energy when required (to fire a shot), characterised in that the energy supply plant (1) has a combustion chamber (2) to which fuel and an oxidator can be applied and a turbine (3) downstream of the said combustion chamber, the turbine (3) being coupled with the storage unit (6) and can be briefly exposed to a pressure of more than 70 bars at a turbine inlet temperature greater than 1300K.

2. A weapons system according to Claim 1, characterised in that the storage unit (6) is constructed as a kinetic store having a gyrating mass (29) and a generator winding (23) wherein, when required (for a shot) rotational energy stored in the gyrating mass (29) can be discharge as electrical energy through external wiring of the generator winding (23).

3. A weapons system according to Claim 1, characterised in that the storage unit (6) has a turbine-coupled storage generator (57) which feeds a static electrical store (58).

4. A weapons system according to Claim 1 or 2, characterised in that between the turbine shaft (4) and the storage unit (6) there is an overrun coupling (5) which is disengaged at a lower turbine speed ($n_T$) than storage speed ($n_S$) ($n_T < n_S$).

5. A weapons system according to one of the preceding Claims, characterised in that the combustion chamber (2) can be exposed to a self-igniting combination of liquid fuel and liquid oxidator.

6. A weapons system according to one of Claims 1 to 4, characterized in that the combustion chamber (2) can be ignited by a self-igniting fuel/oxidator mixture and can then be switched over the fuel oil (diesel oil) as a fuel

7. A weapons system according to one of the preceding Claims, characterised in that the turbine (3) is of double-flow construction, the combustion chamber (2) being disposed between the functionally parallel connected partial turbines (3a, 3b) so that the flow of combustion gas generated in the combustion chamber (2) is deflected into two oppositely directed partial flows which act upon the partial turbines (3a, 3b).

8. A weapons system according to Claim 7, characterised in that the partial turbines (3a, 3b) are in each case of five-stage construction.

9. A weapons system according to one of the preceding Claims, characterised in that the combustion chamber (2) is constructed as a single-tube combustion chamber and is connected to the turbine (3) by an annular passage (7).

10. A weapons system according to one of the preceding Claims, characterised in that water can be injected into the combustion chamber (2) as additional ballast.

11. A weapons system according to one of the preceding Claims, characterised in that fuel, oxidator and water are injected by means of pumps (8a, b, c).

12. A weapons system according to Claim 11, characterised in that the pumps (8a, b, c) are constructed as regulable displacement pumps which can be operated by one or a plurality of hydraulic or electric motors (9).

13. A weapons system according to one of the preceding Claims, characterised in that the combustion chamber (2), the annular passage (7), the blading (30, 34) of the first or of the first two turbine stage(s) and the walls which are subject to hot gases are lined on the inside with heat-resistant insulating coatings, and in that the heat capacity of the insulating coatings is so chosen that the maximum admissible component temperatures are attained at substantially higher combustion chamber temperatures and only after a plurality of charging cycles.

14. A weapons system according to one of the preceding Claims, characterised in that the rotor blades (30) of the first or of the first two turbine stages(s) can be cooled by water from the quantity of ballast provided and which can be supplied through the free end of the turbine shaft (4), leaving the rotor blades (30) at their rear profiled edges (32).

15. A weapons system according to one of the preceding Claims, characterised in that the guide blades (34) of the first or of the first two stage(s) can be cooled by water from the quantity of ballast provided, the water being adapted to be supplied via the turbine housing (20) and to leave the guide blades (34) via out let orifices (36) provided on their rear profiled edges.

16. A weapons system according to one of the preceding Claims, characterised in that it is accommodated on a fighting vehicle which is driven by means of a separate drive system (38).

17. A weapons system according to Claim 16, characterised in that waste gas from the driving system (38) can be fed to the combustion chamber (2) via a gas pipe (10) comprising shut-off means, the turbine (3) being capable of being maintained at an idling speed.

18. A weapons system according to Claims 3 and 16 or 17, characterised in that the driving system (38) comprises, driven by an internal combustion engine, a drive generator (50) which feeds one or a plurality of propulsion engines (52a, b) via a control element (51), the static electrical storage means (58) being capable of being charged by the drive generator (50) by means of a selector switch (56).

19. A weapons system according to Claim 2 and 16 or 17, characterised in that the driving system (38) has, adapted to be driven by an internal combustion engine, a drive generator (50) which feeds one or a plurality of propulsion engines (52a, b), via a control element (51), the generator winding (23) of the storage unit (6), connected as a motor, can be acted upon by the driving generator (38) to accelerate the gyratory mass (29).

FIG.1

FIG.2

FIG.3

FIG.4